# EUROPEAN PATENT SPECIFICATION

(11) **EP 3 316 464 B1**
(45) Date of publication and mention of the grant of the patent: **08.04.2020**
(21) Application number: 16195755.0
(22) Date of filing: 26.10.2016
(51) Int. Cl.: H02M 1/42, H02M 3/335

(54) **A SWITCHED-MODE POWER SUPPLY WITH POWER FACTOR CORRECTION**
SCHALTNETZTEIL MIT LEISTUNGSFAKTORKORREKTUR
ALIMENTATION À DÉCOUPAGE AVEC CORRECTION DU FACTEUR DE PUISSANCE

(43) Date of publication of application: 02.05.2018
(73) Proprietor: ABB Schweiz AG, 5400 Baden (CH)
(72) Inventor: Vieri, Ville, 65320 Vaasa (FI)
(74) Representative: Kolster Oy Ab

(56) References cited:
- EP-A2- 0 726 640
- WO-A2-2009/105734
- WO-A2-2011/116942
- US-A1- 2013 250 625
- US-B1- 7 729 135

## Description

### FIELD OF THE INVENTION

The present invention relates to the field of providing electrical power, particularly to the field of providing DC power generated from mains AC power input, and more particularly to a switched-mode power supply with power factor correction.

### BACKGROUND OF THE INVENTION

A switched-mode power supply (SMPS) is an electronic power supply that has a switching regulator to convert electrical power efficiently. Switched-mode power supplies are nowadays used for many modern day applications.

A switched-mode power supply typically transfers power from a mains AC input source to DC loads, such as e.g. automation devices, servers or personal computers, while converting voltage and current characteristics. Switched-mode power supplies are typically substantially smaller and lighter than a linear regulator due to the smaller transformer size and weight.

A power system operating from the AC mains has an associated power factor defined as the way it draws current from the AC mains source. The power factor of an electric power system is defined as the ratio of the real power flowing to the load to the apparent power. Real power is the capacity of the circuit for performing work in a particular time. Apparent power is the product of the current and voltage of the circuit. Due to a non-linear load that distorts the wave shape of the current drawn from the source, the apparent power will be greater than the real power.

In an electric power system a load with a low power factor draws more current than a load with a high power factor for the same amount of useful power transferred. These higher currents increase the energy lost in the distribution system and require larger wires and other equipment for transmission.

Furthermore, a power supply's power factor affects the harmonics that an AC-DC supply generates on the AC mains, and so electric utilities have major difficulties distributing power for loads that include AC-DC power supplies without power factor correction (PFC) i.e. harmonics reduction.

One typical way to improve the power factor of a power supply is to use a filter, this being referred to as passive PFC. One may incorporate a filter to a power supply, which filter passes current only at line frequency. This type of filter is normally used for low power requirements and reduces the harmonic current, which means that the power factor can be brought to an optimal value, using capacitors or inductors as needed. However, this type of filter requires large-value high-current inductors, which are both expensive and bulky.

Another common way to improve the power factor of a power supply is to use active PFC. Active PFC is a power electronic system that controls the amount of imaginary power drawn by a load in order to obtain a power factor as close to unity as possible. Typically, active PFC controls the input current of the load so that the current waveform is proportional to the mains voltage waveform. Active PFC puts the voltage and current nearly in phase and the reactive power consumption approaches zero. This enables the most efficient delivery of electrical power from the power company to the user.

Typically power supply designs require the use of an addition power stage to incorporate PFC. Both in the case of active or passive PFC, additional components are commonly required which increases the cost, circuit size and complexity.

In a switched-mode power supplies (SMPS), power factor correction (PFC) is becoming more and more important to prevent the presence of distortion and harmonic frequencies in power distribution network. Unlike a normal switched-mode power supply, a switched-mode power supply with power factor correction supply has no large-capacitance bulk capacitors as primary-side energy storage. The power storage of a switched-mode power supply with power factor correction supply must be located after the PFC stage.

WO 2011116942 A1 discloses an AC/DC converter comprising a primary winding belonging to an isolation transformer, and a first secondary winding and a second secondary winding which are disposed in the same direction as, and the opposite direction to the primary winding respectively and which are connected to an output line connected in turn to an output capacitor, said first secondary winding being connected to the output line via a filter choke and said primary winding being connected to a first splitting switch connected in turn to a control circuit. The invention is characterised in that the primary winding comprises an intermediate point connected to a second splitting switch that is connected to the control circuit, dividing the primary winding into a first part and a second part, such as to optimise the transfer of energy between the primary winding and the secondary windings according to the conduction of the switches which are controlled as a function of the presence of current at the output of the first secondary winding.

US 7729135 B1 discloses a power converter system including an input terminal for an input voltage. A transformer, coupled to the input terminal, has a primary winding and a secondary winding. An output terminal is coupled to the secondary winding. Power is delivered to a load of the power converter system at the output terminal. A first control module, coupled through a relay to a tap terminal to the primary winding of the transformer, operates the power converter system if a magnitude of the input voltage is within a low voltage range. A second control module, coupled at an end terminal of the primary winding of the transformer, operates the power converter system if a magnitude of the input voltage is within a high voltage range.

In the following, the prior art will be described with reference to the accompanying drawings of Figures 1 to 2, of which:
Figure 1 shows a simplified block diagram of a switched-mode power supply with power factor correction according to the prior art; and
Figure 2 shows a circuit diagram of a switched-mode power supply with power factor correction according to the prior art.

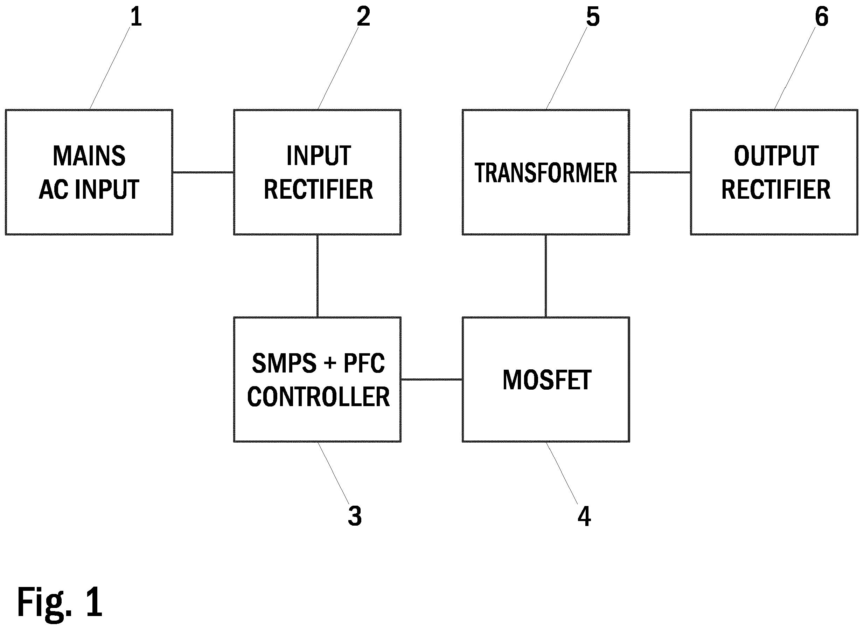

Figure 1 presents a simplified block diagram of a switched-mode power supply with power factor correction according to the prior art. The switched-mode power supply with power factor correction according to the prior art has a mains AC input block 1, an input rectifier block 2, an SMPS+PFC controller block 3, a MOSFET 4 (MOSFET, metal-oxide semiconductor field-effect transistor), a transformer block 5 and an output rectifier block 6.

In a switched-mode power supply with power factor correction according to the prior art mains AC input voltage generated from the mains AC input block 1 is rectified in the input rectifier block 2. The SMPS+PFC controller block 3 of the switched-mode power supply with power factor correction samples the rectified input voltage from the input rectifier block 2 and controls the switching of the MOSFET 4 connected to the transformer block 5. The voltage is transformed in the transformer block 5 and supplied to an output rectifier block 6 supplying a load. The SMPS+PFC controller block 3 of the switched-mode power supply with power factor correction controls the input current supplied to an output rectifier block 6 so that the current waveform is proportional to the mains AC input voltage waveform.

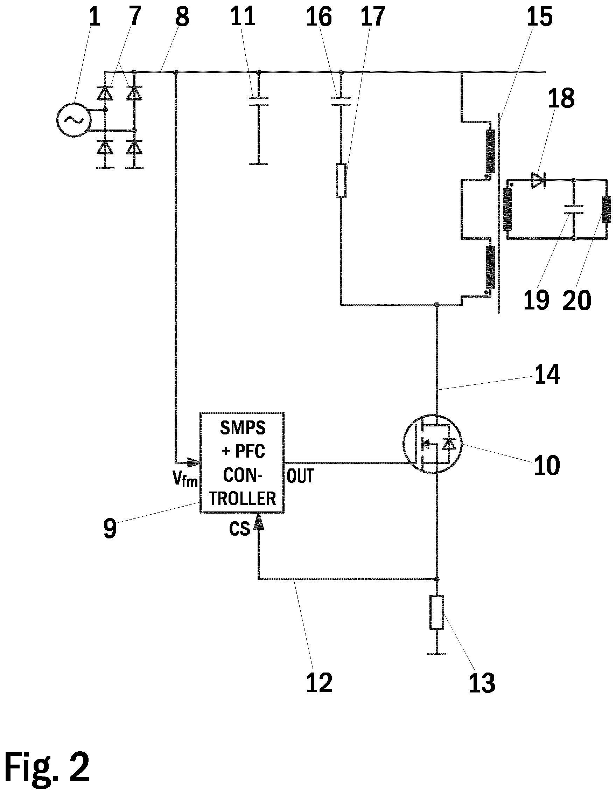

Figure 2 presents a circuit diagram of a switched-mode power supply with power factor correction according to the prior art. The presented switched-mode power supply with power factor correction according to the prior art has a mains AC input block 1 and a diode bridge rectifier 7. The mains AC input voltage generated from the mains AC input block 1 is rectified in the diode bridge rectifier 7.

The presented switched-mode power supply with power factor correction according to the prior art also has an SMPS+PFC controller block 9, a MOSFET 10 and a primary capacitor 11. The SMPS+PFC controller block 9 of the prior art switched-mode power supply with power factor correction samples the rectified input voltage 8 (V_{fm}) from the diode bridge rectifier 7 and controls the switching of the MOSFET 10. A primary capacitor 11 is needed as switching period power storage.

The output of the SMPS+PFC controller block 9 is connected to the gate of the MOSFET 10. The SMPS+PFC controller block 9 samples the rectified input voltage 8 (V_{fm}) and tries to create a similar waveform for the input current, so that the load introduced by the presented switched-mode power supply with power factor correction looks resistive. The SMPS+PFC controller block 9 has a current sense input 12 connected to the source of the MOSFET 10. There is also a first sense resistor 13 connected to the source of the MOSFET 10 of the presented switched-mode power supply with power factor correction according to the prior art.

The presented switched-mode power supply with power factor correction according to the prior art also has an isolated transformer 15 and a capacitor 16 and a resistor 17 connected at primary input of the transformer 15. The capacitor 16 and the resistor 17 form a primary side snubber for reducing electromagnetic interference. The SMPS+PFC controller block 9 of the prior art switched-mode power supply with power factor correction controls the switching of the MOSFET 10 and provides the input current 14 from the drain of the MOSFET 10 to the primary input of the transformer 15.

The secondary output of the transformer 15 of the presented switched-mode power supply with power factor correction according to the prior art is connected to an output rectifier diode 18 and an output storage capacitor 19. A load of the presented switched-mode power supply with power factor correction according to the prior art is marked with a reference number 20.

With the switched-mode power supplies with power factor correction according to the prior art there is a problem with wide voltage range. Wide voltage range is a challenge especially for the power supplies with power factor correction, because there is no conventional primary-side power storage available. For high voltages, the capacitor of the input should have small capacitance in order not to introduce distortion to the input current. For low voltages, too low capacitance is not able to supply the switching circuit during the switching period.

Another problem with the switched-mode power supplies with power factor correction according to the prior art relates to rating of inductive components. When built as single-stage flyback converter, the SMPS itself also needs to have very large input voltage range. For small voltages, the input inductance should be relatively small to keep the pulse width of the primary switch within reasonable range. With small inductance, the duty cycle usually then becomes too small for good regulation and low switching losses.

The switched-mode power supplies with power factor correction according to the prior art are designed for universal voltage range that has input voltage dynamic range of approximately 1:3.

Switched-mode power supplies with power factor correction are promising solutions enabling the most efficient delivery of electrical power from the power company to the user. However, its input voltage dynamic range of range is not adequate for providing electrical power for both low-end and high-end input voltage ranges.

The problem therefore is to find a simple and straight-forward switched-mode power supply structure with power factor correction that has a broader input voltage dynamic range than the prior art switched-mode power supplies with power factor correction.

There is a demand in the market for a switched-mode power supply structure with power factor correction that has a broader input voltage dynamic range when compared to the prior art switched-mode power supplies with power factor correction currently on the market.

### BRIEF DESCRIPTION OF THE INVENTION

The object of the present invention is thus to provide an apparatus for overcoming the above problems and to alleviate the above disadvantages.

This object is achieved by a switched mode power supply with power factor correction with the technical features of independent claim 1. Alternative embodiments are described in the dependent claims.

Preferably, said switched-mode power supply comprises a low-pass filter for finding out the peak value of input voltage. More preferably, said peak value of the input voltage is used for the selection of an input voltage range.

Preferably, when a high input voltage range is selected said controller block controls the switching of the first MOSFET and provides an input current from the drain of the first MOSFET to the primary side endpoint of said isolated transformer, and when a low input voltage range is selected said controller block controls the switching of the second MOSFET and provides an input current from the drain of the second MOSFET to the primary side midpoint of said isolated transformer.

Preferably, said switched-mode power supply comprises a series diode coupled between the primary side endpoint of said isolated transformer and the drain of the first MOSFET.

Preferably, said switched-mode power supply has a current sense input of said controller block and a first sense resistor connected to the source of the first MOSFET and to the source of the second MOSFET. More preferably, said switched-mode power supply has a second sense resistor and a sense resistor switch for switching said second sense resistor on in a low input voltage range, where higher peak primary currents occur.

Preferably, in the coupling of said primary side midpoint of said isolated transformer 10 %- 75 % of the total primary side winding of said isolated transformer is utilized. Alternatively, in the coupling of said primary side midpoint of said isolated transformer 30 %- 60 % of the total primary side winding of said isolated transformer is utilized. Further alternatively, in the coupling of said primary side midpoint of said isolated transformer 50 % of the total primary side winding of said isolated transformer is utilized.

Preferably, said isolated transformer is a flyback transformer. Alternatively, said isolated transformer is a boost inductor with a center tap as a primary side midpoint.

### BRIEF DESCRIPTION OF THE DRAWINGS

Figure 1 shows a simplified block diagram of a switched-mode power supply with power factor correction according to the prior art;
Figure 2 shows a circuit diagram of a switched-mode power supply with power factor correction according to the prior art;

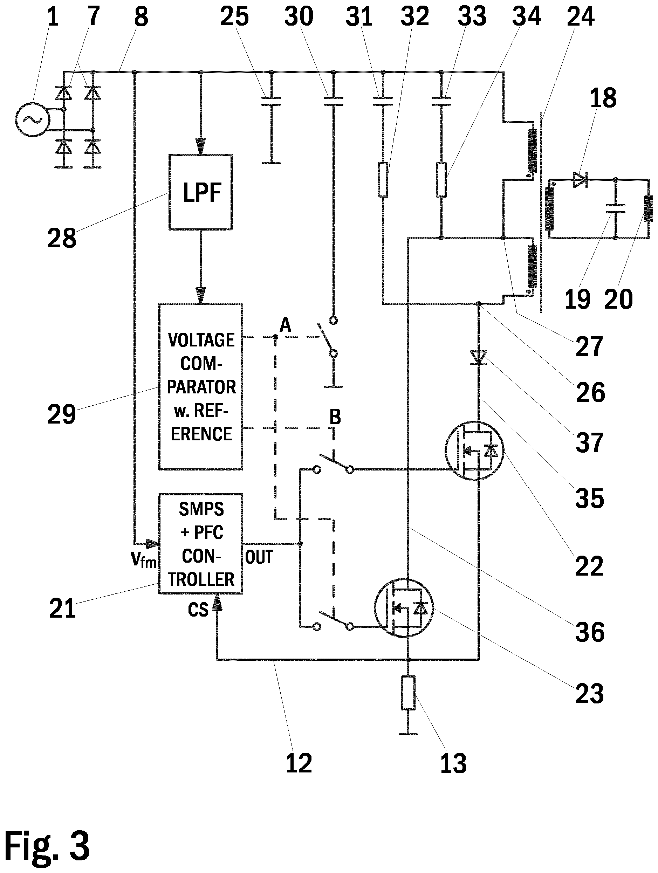

Figure 3 shows one embodiment of a circuit diagram of a switched-mode power supply with power factor correction according to the present invention;

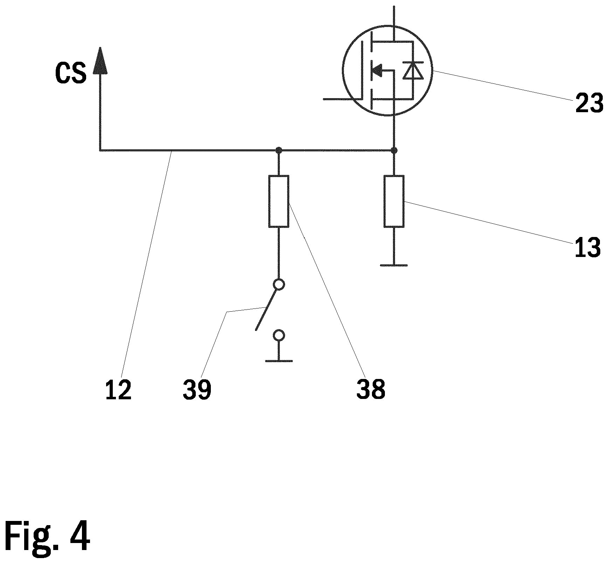

Figure 4 shows one embodiment of a current sensing arrangement of a switched-mode power supply with power factor correction according to the present invention; and

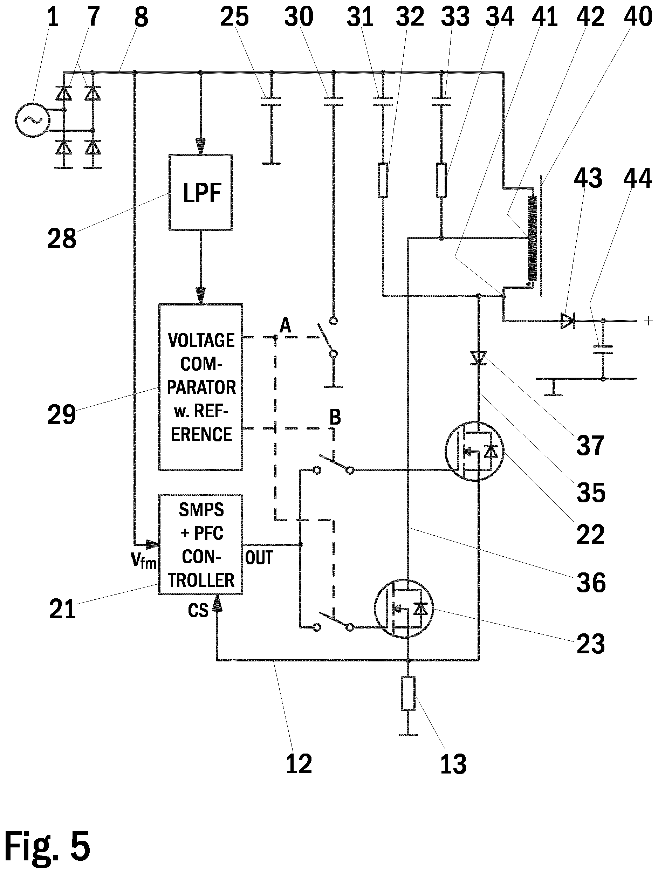

Figure 5 shows another embodiment of a circuit diagram of a switched-mode power supply with power factor correction according to the present invention.

The prior art drawings of Figures 1 to 2 have been presented earlier. In the following, the invention will be described in greater detail by means of preferred embodiments with reference to the accompanying drawings of Figures 3 to 5.

### DETAILED DESCRIPTION OF THE INVENTION

The present invention relates to a switched-mode power supply with power factor correction. The switched-mode power supply with power factor correction according to the present invention has an isolated transformer and an controller block, said controller block controlling the switching of a first MOSFET (MOSFET, metal-oxide semiconductor field-effect transistor) connected to a primary side endpoint of said isolated transformer and the switching of a second MOSFET connected to a primary side midpoint of said isolated transformer.

Figure 3 presents one embodiment of a circuit diagram of a switched-mode power supply with power factor correction according to the present invention. The presented switched-mode power supply with power factor correction has a mains AC input block 1 and a diode bridge rectifier 7. The mains AC input voltage generated from the mains AC input block 1 is rectified in the diode bridge rectifier 7 to generate full-wave rectified input voltage 8.

The presented switched-mode power supply with power factor correction according to the present embodiment has an SMPS+PFC controller block 21 (SMPS, switched-mode power supply; PFC, power factor correction), a first MOSFET 22, a second MOSFET 23, an isolated transformer 24 and a primary capacitor 25. The said isolated transformer 24 may be a flyback transformer 24.

The first MOSFET 22 is connected from its drain to a primary side endpoint 26 of said isolated transformer 24 and the second MOSFET 23 is connected from its drain to a primary side midpoint 27 of said isolated transformer 24. In this invention specification the term "primary side endpoint" specifies that all of the primary side winding of said isolated transformer 24 is utilized in the coupling. Respectively, in this invention specification the term "primary side midpoint" specifies that a specific portion of the primary side winding of said isolated transformer 24 is utilized in the coupling, said specific portion of the primary side winding being 10 %- 75 %, preferably 30 %- 60 %, more preferably 50 % of the total primary side winding.

The SMPS+PFC controller block 21 of the switched-mode power supply with power factor correction samples the rectified input voltage 8 (V_{fm}) from the diode bridge rectifier 7 and controls the switching of the first MOSFET 22 and the second MOSFET 23. A first primary capacitor 25 is needed as switching period power storage.

In the solution according to the present embodiment, the input voltage range is divided into two ranges. The switched-mode power supply with power factor correction according to the present embodiment has a low-pass filter 28 and a voltage comparator block 29. The full-wave rectified input voltage 8 is filtered using the low-pass filter 28 to find out the peak value of the input voltage 8. The peak value of the input voltage 8 is used for the selection of the input voltage range. The selection of the input voltage range is done by the voltage comparator block 29, said voltage comparator block 29 having a reference voltage. The voltage comparator block 29 is selected so that it has enough hysteresis as the selection signal must not oscillate with line frequency at any input voltage 8 or load current.

The voltage comparator block 29 activates a first control signal 'A' at low voltages in a low input voltage range said first control signal 'A' switching the connection of the output of the SMPS+PFC controller block 21 to the gate of the second MOSFET 23. Respectively, the voltage comparator block 29 activates a second control signal 'B' at high voltages in a high input voltage range said second control signal 'B' switching the connection of the output of the SMPS+PFC controller block 21 to the gate of the first MOSFET 22.

The first primary capacitor 25 in the input filter of the PFC supply represents the capacitance value used in the high voltage range. In the low voltage range the first control signal 'A' activated by the voltage comparator block 29 may be used switch on a second primary capacitor 30 connected in parallel with the said first primary capacitor 25. Both the first primary capacitor 25 and the second primary capacitor 30 together represent the capacitance value used in the low voltage range.

In the switched-mode power supply with power factor correction according to the present embodiment the output of the SMPS+PFC controller block 21 is connected to the gate of the first MOSFET 22 or to the gate of the second MOSFET 23 as switched by the first control signal 'A' and the second control signal 'B' activated by the voltage comparator block 29. The SMPS+PFC controller block 21 samples the rectified input voltage 8 (V_{fm}) and tries to create a similar waveform for the input current, so that the load introduced by the presented switched-mode power supply with power factor correction looks resistive. The SMPS+PFC controller block 21 has a current sense input 12 connected to the source of the first MOSFET 22 and to the source of the second MOSFET 23. There is also a first sense resistor 13 connected to the source of the first MOSFET 22 and to the source of the second MOSFET 23 of the presented embodiment of a switched-mode power supply with power factor correction according to the present invention.

In the solution according to the present embodiment, the input voltage range is divided into two ranges, a low input voltage range and a high input voltage range. A larger capacitance of the primary filter and smaller primary inductance of the switching transformer are used for the low-end of the input voltage range. Respectively, smaller capacitance and higher inductance are utilized at the high-end of the input voltage range.

In the presented switched-mode power supply with power factor correction according to the present embodiment the first MOSFET 22 is connected from its drain to a primary side endpoint 26 of said isolated transformer 24. There is also a first input capacitor 31 and a first input resistor 32 connected to a primary side endpoint 26 of said isolated transformer 24. Said first input capacitor 31 and said first input resistor 32 form a first primary side snubber for reducing EMI (EMI, electromagnetic interference). The second MOSFET 23 is connected from its drain to a primary side midpoint 27 of said isolated transformer 24. Respectively, there also is a second input capacitor 33 and a second input resistor 34 connected to a primary side midpoint 27 of said isolated transformer 24. Said second input capacitor 33 and said second input resistor 34 form a second primary side snubber for reducing EMI.

In the present embodiment of a switched-mode power supply with power factor correction the SMPS+PFC controller block 21 controls the switching of the first MOSFET 22 and the second MOSFET 23. When the high voltage range is selected the SMPS+PFC controller block 21 controls the switching of the first MOSFET 22 and provides the input current 35 from the drain of the first MOSFET 22 to the primary side endpoint 26 of said isolated transformer 24. When the low voltage range is selected the SMPS+PFC controller block 21 controls the switching of the second MOSFET 23 and provides the input current 36 from the drain of the second MOSFET 23 to the primary side midpoint 27 of said isolated transformer 24.

In the present embodiment of a switched-mode power supply with power factor correction there may be a series diode 37 coupled between the primary side endpoint 26 of said isolated transformer 24 and the drain of the first MOSFET 22. The first MOSFET 22 utilizes the series diode 37 for preventing the current from flowing opposite way via the body diode when the second MOSFET 23 is operating.

The secondary output of the transformer 24 of the presented switched-mode power supply with power factor correction according to the present embodiment is connected to an output rectifier diode 18 and an output storage capacitor 19. A load of the presented switched-mode power supply with power factor correction according to the present embodiment is marked with a reference number 20.

In the switched-mode power supply with power factor correction according to the present embodiment the primary winding of said isolated transformer 24 may be divided into two equal sections, for example in order to minimize leakage inductance. Since the inductance of a coil is proportional to the second power of the number of turns, one half of the primary winding of said isolated transformer 24 has one fourth of the inductance of total primary winding of said isolated transformer 24.

In the switched-mode power supply with power factor correction according to the present embodiment the first MOSFET 22 used at high voltage range is connected from its drain to a primary side endpoint 26 of said isolated transformer 24. At low voltage range the second MOSFET 23 is connected from its drain to a primary side midpoint 27 of said isolated transformer 24.

In the switched-mode power supply with power factor correction according to the present embodiment the voltage comparator block 29 controls the selection of the first MOSFET 22 and the second MOSFET 23. The selected MOSFET 22, 23 is controlled by the SMPS+PFC controller block 21.

The series diode 37 coupled between the primary side endpoint 26 of said isolated transformer 24 and the drain of the first MOSFET 22 prevents the two MOSFETs 22, 23 connected to the primary side of said isolated transformer 24 from creating a short circuit or other harmful situation even when conducting at the same time. Therefore, the switch between the MOSFETs 22, 23 can for example be a normal two-channel low-side driver with separate enable inputs and there are no timing requirements for the primary change.

In an embodiment of the present switched-mode power supply in which the primary winding of said isolated transformer 24 is divided into two equal sections, the SMPS+PFC controller block 21 sees a primary inductance of one fourth of the inductance of total of said isolated transformer 24 at low voltage, compared to the inductance of total of said isolated transformer 24 at high input voltage. This helps to optimize operation and voltage regulation over wide input voltage range. With help of the solution according to the present invention, the input voltage ranges of 1:9 can be reliably used.

Figure 4 presents one embodiment of a current sensing arrangement of a switched-mode power supply with power factor correction according to the present invention. In the current sensing arrangement of a switched-mode power supply with power factor correction according to the presented embodiment there is a current sense input 12 connected from the source of the MOSFET 23 to the SMPS+PFC controller block 21. There is also a first sense resistor 13 connected to the source of the MOSFET 23 of the current sensing arrangement of the presented embodiment.

In the presented embodiment of a current sensing arrangement of a PFC switched-mode power supply there is also an additional second sense resistor 38 connected to the source of the MOSFET 23 in parallel with the first sense resistor 13. In the presented embodiment of a current sensing arrangement of a PFC switched-mode power supply there is also a sense resistor switch 39 that can be used to switch the second sense resistor 38 on or off.

In the presented embodiment of a current sensing arrangement of a PFC switched-mode power supply different current sense resistor values can be used for different voltage ranges by using sense resistor switch 39 to switch the second sense resistor 38 on to decrease the shunt resistance value for low input voltage range, where higher peak primary currents occur. In the presented embodiment of a current sensing arrangement of a PFC switched-mode power supply the MOSFET 23 may e.g. be a low-Rds MOSFET 23.

Figure 5 presents another embodiment of a circuit diagram of a switched-mode power supply with power factor correction according to the present invention. The presented another embodiment shows a boost stage of a two-stage PFC switched-mode power supply. The presented switched-mode power supply with power factor correction has a mains AC input block 1 and a diode bridge rectifier 7. The mains AC input voltage generated from the mains AC input block 1 is rectified in the diode bridge rectifier 7 to generate full-wave rectified input voltage 8.

The presented switched-mode power supply with power factor correction according to the present another embodiment has an SMPS+PFC controller block 21, a first MOSFET 22, a second MOSFET 23, an isolated transformer 40 and a primary capacitor 25. The said isolated transformer 40 may be a boost inductor 40 with a center tap 42 as a primary side midpoint 42.

The first MOSFET 22 is connected from its drain to a primary side endpoint 41 of said boost inductor 40 and the second MOSFET 23 is connected from its drain to a primary side center tap 42 of said boost inductor 40. In this invention specification the term "primary side endpoint" specifies that all of the primary side winding of said boost inductor 40 is utilized in the coupling. Respectively, in this invention specification the term "primary side midpoint" specifies that a specific portion of the primary side winding of said boost inductor 40 is utilized in the coupling, said specific portion of the primary side winding being 10 %- 75 %, preferably 30 %- 60 %, more preferably 50 % of the total primary side winding.

The SMPS+PFC controller block 21 of the switched-mode power supply with power factor correction samples the rectified input voltage 8 (V_{fm}) from the diode bridge rectifier 7 and controls the switching of the first MOSFET 22 and the second MOSFET 23. A first primary capacitor 25 is needed as switching period power storage.

In the solution according to the present another embodiment, the input voltage range is divided into two ranges. The switched-mode power supply with power factor correction according to the present another embodiment has a low-pass filter 28 and a voltage comparator block 29. The full-wave rectified input voltage 8 is filtered using the low-pass filter 28 to find out the peak value of the input voltage 8. The peak value of the input voltage 8 is used for the selection of the input voltage range. The selection of the input voltage range is done by the voltage comparator block 29, said voltage comparator block 29 having a reference voltage. The voltage comparator block 29 activates a first control signal 'A' at low voltages in a low input voltage range said first control signal 'A' switching the connection of the output of the SMPS+PFC controller block 21 to the gate of the second MOSFET 23. Respectively, the voltage comparator block 29 activates a second control signal 'B' at high voltages in a high input voltage range said second control signal 'B' switching the connection of the output of the SMPS+PFC controller block 21 to the gate of the first MOSFET 22.

The first primary capacitor 25 in the input filter of the PFC supply represents the capacitance value used in the high voltage range. In the low voltage range the first control signal 'A' activated by the voltage comparator block 29 may be used switch on a second primary capacitor 30 connected in parallel with the said first primary capacitor 25. Both the first primary capacitor 25 and the second primary capacitor 30 together represent the capacitance value used in the low voltage range.

In the switched-mode power supply with power factor correction according to the present another embodiment the output of the SMPS+PFC controller block 21 is connected to the gate of the first MOSFET 22 or to the gate of the second MOSFET 23 as switched by the first control signal 'A' and the second control signal 'B' activated by the voltage comparator block 29. The SMPS+PFC controller block 21 samples the rectified input voltage 8 (V_{fm}) and tries to create a similar waveform for the input current, so that the load introduced by the presented switched-mode power supply with power factor correction looks resistive. The SMPS+PFC controller block 21 has a current sense input 12 connected to the source of the first MOSFET 22 and to the source of the second MOSFET 23. There is also a first sense resistor 13 connected to the source of the first MOSFET 22 and to the source of the second MOSFET 23 of the presented another embodiment of a switched-mode power supply with power factor correction according to the present invention. In the solution according to the present another embodiment, the input voltage range is divided into two ranges, a low input voltage range and a high input voltage range. A larger capacitance of the primary filter and smaller primary inductance of the switching transformer are used for the low-end of the input voltage range. Respectively, smaller capacitance and higher inductance are utilized at the high-end of the input voltage range.

In the presented switched-mode power supply with power factor correction according to the present another embodiment the first MOSFET 22 is connected from its drain to a primary side endpoint 41 of said boost inductor 40. There is also a first input capacitor 31 and a first input resistor 32 connected to a primary side endpoint 41 of said boost inductor 40. Said first input capacitor 31 and said first input resistor 32 form a first primary side snubber for reducing EMI (EMI, electromagnetic interference). The second MOSFET 23 is connected from its drain to a primary side center tap 42 of said boost inductor 40. Respectively, there also is a second input capacitor 33 and a second input resistor 34 connected to a primary side center tap 42 of said boost inductor 40. Said second input capacitor 33 and said second input resistor 34 form a second primary side snubber for reducing EMI.

In the present another embodiment of a switched-mode power supply with power factor correction the SMPS+PFC controller block 21 controls the switching of the first MOSFET 22 and the second MOSFET 23. When the high voltage range is selected the SMPS+PFC controller block 21 controls the switching of the first MOSFET 22 and provides the input current 35 from the drain of the first MOSFET 22 to the primary side endpoint 41 of said boost inductor 40. When the low voltage range is selected the SMPS+PFC controller block 21 controls the switching of the second MOSFET 23 and provides the input current 36 from the drain of the second MOSFET 23 to the primary side center tap 42 of said boost inductor 40. In the present another embodiment of a switched-mode power supply with power factor correction there may be a series diode 37 coupled between the primary side endpoint 41 of said boost inductor 40 and the drain of the first MOSFET 22. The first MOSFET 22 utilizes the series diode 37 for preventing the current from flowing opposite way via the body diode when the second MOSFET 23 is operating.

The secondary output of the boost inductor 40 of the presented switched-mode power supply with power factor correction according to the present another embodiment is connected to an output rectifier diode 43 and an output storage capacitor 44.

In the switched-mode power supply with power factor correction according to the present another embodiment the primary winding of said boost inductor 40 may be divided into two equal sections. Since the inductance of a coil is proportional to the second power of the number of turns, one half of the primary winding of said boost inductor 40 has one fourth of the inductance of total primary winding of said boost inductor 40. In the switched-mode power supply with power factor correction according to the present another embodiment the inductance winding turn ratio between the two halves of the primary winding of said boost inductor 40 is freely selectable.

In the switched-mode power supply with power factor correction according to the present another embodiment the first MOSFET 22 used at high voltage range is connected from its drain to a primary side endpoint 41 of said boost inductor 40. At low voltage range the second MOSFET 23 is connected from its drain to a primary side center tap 42 of said boost inductor 40. In the switched-mode power supply with power factor correction according to the present another embodiment the voltage comparator block 29 controls the selection of the first MOSFET 22 and the second MOSFET 23. The selected MOSFET 22, 23 is controlled by the SMPS+PFC controller block 21. The principle according to the present invention can also be used in DC-input power supplies, where very large input voltage range is desirable.

The series diode 37 coupled between the primary side endpoint 41 of said boost inductor 40 and the drain of the first MOSFET 22 prevents the two MOSFETs 22, 23 connected to the primary side of said boost inductor 40 from creating a short circuit or other harmful situation even when conducting at the same time. Therefore, the switch between the MOSFETs 22, 23 can for example be a normal two-channel low-side driver with separate enable inputs and there are no timing requirements for the primary change.

In an another embodiment of the present switched-mode power supply in which the primary winding of said boost inductor 40 is divided into two equal sections, the SMPS+PFC controller block 21 sees a primary inductance of one fourth of the inductance of total of said boost inductor 40 at low voltage, compared to the inductance of total of said boost inductor 40 at high input voltage.

The solution according to the present invention helps to optimize operation and voltage regulation over wide input voltage range. With help of the solution according to the present invention, the input voltage ranges of 1:9 can be reliably used.

Switched-mode power supplies with power factor correction are promising solutions enabling the most efficient delivery of electrical power from the power company to the user.

With help of the solution according to the present invention also the input voltage dynamic range of a switched-mode power supply structure with power factor correction is sufficient for providing electrical power for both low-end and high-end input voltage ranges.

The switched-mode power supply structure with power factor correction according to the present invention provides a reliable operation for the low-end input voltage range and also for the high-end input voltage range.

The solution according to the present invention provides a simple and straight-forward switched-mode power supply structure with power factor correction that has a broader input voltage dynamic range than the prior art switched-mode power supplies with power factor correction.

## Claims

1. A switched-mode power supply with power factor correction, comprising:
- an isolated transformer (24, 40) with a first primary side endpoint connected to the rectified input voltage (8),
- first (25) and second (30) primary capacitors connected to the rectified input voltage,
- a controller block (21), said controller block (21) configured to control the switching of a first MOSFET (22) connected to a second primary side endpoint (26, 41) of said isolated transformer (24, 40) and the switching of a second MOSFET (23) connected to a primary side midpoint (27, 42) of said isolated transformer (24, 40), and
- a voltage comparator block (29), said voltage comparator block (29) configured to select an input voltage range of the rectified input voltage (8), and said voltage comparator block (29) having a reference voltage,
said switched-mode power supply being **characterized in that** the voltage comparator block (29) is further configured to:
- when selecting a low input voltage range, activate a first control signal (A) at low voltages in a low input voltage range, said first control signal (A) switching the connection of the output of the controller block (21) to the gate of the second MOSFET (23), and said first control signal (A) switching on the second primary capacitor (30) connected in parallel with the first primary capacitor (25) associated to a high input voltage range, and
- when selecting the high input voltage range, activate a second control signal (B) at high voltages in a high input voltage range, said second control signal (B) switching the connection of the output of the controller block (21) to the gate of the first MOSFET (22).

2. A switched-mode power supply according to claim 1, **charac**- **terized** in that said switched-mode power supply comprises a low-pass filter (28) for finding out the peak value of input voltage (8).

3. A switched-mode power supply according to claim 2, **characterized in that** said peak value of the input voltage (8) is used for the selection of an input voltage range.

4. A switched-mode power supply according to any one of claims 1 to 3, **characterized in that** said controller block (21) is configured to
- when a high input voltage range is selected, control the switching of the first MOSFET (22) and provide an input current (35) from the drain of the first MOSFET (22) to the primary side endpoint (26, 41) of said isolated transformer (24, 40), and
- when a low input voltage range is selected, control the switching of the second MOSFET (23) and provide an input current (36) from the drain of the second MOSFET (23) to the primary side midpoint (27, 42) of said isolated transformer (24, 40).

5. A switched-mode power supply according to any one of claims 1 to 4, **characterized in that** said switched-mode power supply comprises a series diode (37) coupled between the primary side endpoint (26, 41) of said isolated transformer (24, 40) and the drain of the first MOSFET (22).

6. A switched-mode power supply according to any one of claims 1 to 5, **characterized in that** said switched-mode power supply has a current sense input (12) of said controller block (21) and a first sense resistor (13) connected to the source of the first MOSFET (22) and to the source of the second MOSFET (23).

7. A switched-mode power supply according to claim 6, **characterized in that** said switched-mode power supply has a second sense resistor (38) and a sense resistor switch (39) for switching said second sense resistor (38) on in a low input voltage range, where higher peak primary currents occur.

8. A switched-mode power supply according to any one of claims 1 to 7, **characterized in that** in the coupling of said primary side midpoint (27, 42) of said isolated transformer (24, 40) 10 %- 75 % of the total primary side winding of said isolated transformer (24, 40) is utilized.

9. A switched-mode power supply according to any one of claims 1 to 7, **characterized in that** in the coupling of said primary side midpoint (27, 42) of said isolated transformer (24, 40) 30 %- 60 % of the total primary side winding of said isolated transformer (24, 40) is utilized.

10. A switched-mode power supply according to any one of claims 1 to 7, **characterized in that** in the coupling of said primary side midpoint (27, 42) of said isolated transformer (24, 40) 50 % of the total primary side winding of said isolated transformer (24, 40) is utilized.

11. A switched-mode power supply according to any one of claims 1 to 10, **characterized in that** said isolated transformer (24) is a flyback transformer (24).

12. A switched-mode power supply according to any one of claims 1 to 10, **characterized in that** said isolated transformer (40) is a boost inductor (40) with a center tap (42) as a primary side midpoint (42).

## Patentansprüche

1. Schaltnetzteil mit Leistungsfaktorkorrektur, das Folgendes umfasst:
- einen isolierten Transformator (24, 40) mit einem ersten Primärseitenendpunkt, der mit der gleichgerichteten Eingangsspannung (8) verbunden ist,
- einen ersten (25) und einen zweiten (30) Primärkondensator, die mit der gleichgerichteten Eingangsspannung verbunden sind,
- einen Steuerungsblock (21), wobei der Steuerungsblock (21) dazu ausgelegt ist, das Schalten eines ersten MOSFETs (22), der mit einem zweiten Primärseitenendpunkt (26, 41) des isolierten Transformators (24, 40) verbunden ist, und das Schalten eines zweiten MOSFETs (23), der mit einem Primärseitenmittelpunkt (27, 42) des isolierten Transformators (24, 40) verbunden ist, zu steuern, und
- einen Spannungsvergleicherblock (29), wobei der Spannungsvergleicherblock (29) dazu ausgelegt ist, einen Eingangsspannungsbereich der gleichgerichteten Eingangsspannung (8) auszuwählen, und der Spannungsvergleicherblock (29) eine Referenzspannung aufweist,
wobei das Schaltnetzteil **dadurch gekennzeichnet ist, dass** der Spannungsvergleicherblock (29) ferner zu Folgendem ausgelegt ist:
- bei Auswahl eines Niedrigeingangsspannungsbereichs, Aktivieren eines ersten Steuersignals (A) bei niedrigen Spannungen in einem Niedrigeingangsspannungsbereich, wobei das erste Steuersignal (A) die Verbindung des Ausgangs des Steuerungsblocks (21) mit dem Gate des zweiten MOSFETs (23) schaltet, und wobei das erste Steuersignal (A) den zweiten Primärkondensator (30), der mit dem mit einem Hocheingangsspannungsbereich assoziierten ersten Primärkondensator (25) parallel geschaltet ist, einschaltet, und
- bei Auswahl eines Hocheingangsspannungsbereichs, Aktivieren eines zweiten Steuersignals (B) bei hohen Spannungen in einem Hocheingangsspannungsbereich, wobei das zweite Steuersignal (B) die Verbindung des Ausgangs des Steuerungsblocks (21) mit dem Gate des ersten MOSFETs (22) schaltet.

2. Schaltnetzteil nach Anspruch 1, **dadurch gekennzeichnet, dass** das Schaltnetzteil ein Tiefpassfilter (28) zum Ermitteln des Spitzenwerts der Eingangsspannung (8) umfasst.

3. Schaltnetzteil nach Anspruch 2, **dadurch gekennzeichnet, dass** der Spitzenwert der Eingangsspannung (8) für die Auswahl eines Eingangsspannungsbereichs verwendet wird.

4. Schaltnetzteil nach einem der Ansprüche 1 bis 3, **dadurch gekennzeichnet, dass** der Steuerungsblock (21) zu Folgendem ausgelegt ist:
- bei Auswahl eines Hocheingangsspannungsbereichs, Steuern des Schaltens des ersten MOSFETs (22) und Zuführen eines Eingangsstroms (35) von dem Drain des ersten MOSFETs (22) zu dem Primärseitenendpunkt (26, 41) des isolierten Transformators (24, 40), und
- bei Auswahl eines Niedrigeingangsspannungsbereichs, Steuern des Schaltens des zweiten MOSFETs (23) und Zuführen eines Eingangsstroms (36) von dem Drain des zweiten MOSFETs (23) zu dem Primärseitenmittelpunkt (27, 42) des isolierten Transformators (24, 40).

5. Schaltnetzteil nach einem der Ansprüche 1 bis 4, **dadurch gekennzeichnet, dass** das Schaltnetzteil eine Reihendiode (37) umfasst, die zwischen den Primärseitenendpunkt (26, 41) des isolierten Transformators (24, 40) und den Drain des ersten MOSFETs (22) gekoppelt ist.

6. Schaltnetzteil nach einem der Ansprüche 1 bis 5, **dadurch gekennzeichnet, dass** das Schaltnetzteil einen Stromerfassungseingang (12) des Steuerungsblocks (21) und einen ersten Erfassungswiderstand (13) aufweist, die mit der Source des ersten MOSFETs (22) und der Source des zweiten MOSFETs (23) verbunden sind.

7. Schaltnetzteil nach Anspruch 6, **dadurch gekennzeichnet, dass** das Schaltnetzteil einen zweiten Erfassungswiderstand (38) und einen Erfassungswiderstandschalter (39) zum Einschalten des zweiten Erfassungswiderstands (38) in einem Niedrigeingangsspannungsbereich, in dem höhere Spitzenprimärströme auftreten, aufweist.

8. Schaltnetzteil nach einem der Ansprüche 1 bis 7, **dadurch gekennzeichnet, dass** beim Koppeln des Primärseitenmittelpunkts (27, 42) des isolierten Transformators (24, 40) 10 % bis 75 % der gesamten Primärwicklung des isolierten Transformators (24, 40) genutzt werden.

9. Schaltnetzteil nach einem der Ansprüche 1 bis 7, **dadurch gekennzeichnet, dass** beim Koppeln des Primärseitenmittelpunkts (27, 42) des isolierten Transformators (24, 40) 30 % bis 60 % der gesamten Primärwicklung des isolierten Transformators (24, 40) genutzt werden.

10. Schaltnetzteil nach einem der Ansprüche 1 bis 7, **dadurch gekennzeichnet, dass** beim Koppeln des Primärseitenmittelpunkts (27, 42) des isolierten Transformators (24, 40) 50 % der gesamten Primärwicklung des isolierten Transformators (24, 40) genutzt werden.

11. Schaltnetzteil nach einem der Ansprüche 1 bis 10, **dadurch gekennzeichnet, dass** es sich bei dem isolierten Transformator (24) um einen Flyback-Transformator (24) handelt.

12. Schaltnetzteil nach einem der Ansprüche 1 bis 10, **dadurch gekennzeichnet, dass** es sich bei dem isolierten Transformator (40) um eine Boost-Induktivität (40) mit einem Mittelabgriff (42) als ein Primärseitenmittelpunkt (42) handelt.

## Revendications

1. Alimentation à découpage avec correction de facteur de puissance, comprenant :
un transformateur isolé (24, 40) avec un premier point terminal côté primaire connecté à la tension d'entrée redressée (8) ;
des premier (25) et second (30) condensateurs primaires connectés à la tension d'entrée redressée ;
un bloc contrôleur (21), ledit bloc contrôleur (21) étant configuré pour contrôler la commutation d'un premier MOSFET (22) connecté à un second point terminal côté primaire (26, 41) dudit transformateur isolé (24, 40), et la commutation d'un second MOSFET (23) connecté à un point médian côté primaire (27, 42) dudit transformateur isolé (24, 40) ; et
un bloc comparateur de tension (29), ledit bloc comparateur de tension (29) étant configuré pour sélectionner une plage de tension d'entrée de la tension d'entrée redressée (8), et ledit bloc comparateur de tension (29) ayant une tension de référence,
ladite alimentation à découpage étant **caractérisée en ce que** le bloc comparateur de tension (29) est en outre configuré pour :
quand une plage de basse tension d'entrée est sélectionnée, activer un premier signal de contrôle (A) à des basses tensions dans une plage de basse tension d'entrée, ledit premier signal de contrôle (A) commutant la connexion de la sortie du bloc contrôleur (21) sur la grille du second MOSFET (23) et ledit premier signal de contrôle (A) commutant sur le second condensateur primaire (30) connecté en parallèle au premier condensateur primaire (25) associé à une plage de haute tension d'entrée, et
quand la plage de haute tension d'entrée est sélectionnée, activer un second signal de contrôle (B) à des hautes tensions dans une plage de haute tension d'entrée, ledit second signal de contrôle (B) commutant la connexion de la sortie du bloc contrôleur (21) sur la grille du premier MOSFET (22).

2. Alimentation à découpage selon la revendication 1, **caractérisée en ce que** ladite alimentation à découpage comprend un filtre passe-bas (28) pour découvrir la valeur de crête d'une tension d'entrée (8).

3. Alimentation à découpage selon la revendication 2, **caractérisée en ce que** ladite valeur de crête de la tension d'entrée (8) est utilisée pour la sélection d'une plage de tension d'entrée.

4. Alimentation à découpage selon l'une quelconque des revendications 1 à 3, **caractérisée en ce que** ledit bloc contrôleur (21) est configuré pour :
quand une plage de haute tension d'entrée est sélectionnée, contrôler la commutation du premier MOSFET (22) et fournir un courant d'entrée (35) du drain du premier MOSFET (22) au point terminal côté primaire (26, 41) dudit transformateur isolé (24, 40) ; et
quand une plage de basse tension d'entrée est sélectionnée, contrôler la commutation du second MOSFET (23) et fournir un courant d'entrée (36) du drain du second MOSFET (23) au point médian côté primaire (27, 42) dudit transformateur isolé (24, 40).

5. Alimentation à découpage selon l'une quelconque des revendications 1 à 4, **caractérisée en ce que** ladite alimentation à découpage comprend une diode série (37) couplée entre le point terminal côté primaire (26, 41) dudit transformateur isolé (24, 40) et le drain du premier MOSFET (22).

6. Alimentation à découpage selon l'une quelconque des revendications 1 à 5, **caractérisée en ce que** ladite alimentation à découpage a une entrée de détection de courant (12) dudit bloc contrôleur (21) et une première résistance de détection (13) connectées à la source du premier MOSFET (22) et à la source du second MOSFET (23).

7. Alimentation à découpage selon la revendication 6, **caractérisée en ce que** ladite alimentation à découpage a une seconde résistance de détection (38) et un interrupteur de résistance de détection (39) pour mettre ladite seconde résistance de détection (38) à l'état passant dans une plage de basse tension d'entrée, où apparaissent des courants primaires de crête supérieurs.

8. Alimentation à découpage selon l'une quelconque des revendications 1 à 7, **caractérisée en ce que** dans le couplage dudit point médian côté primaire (27, 42) dudit transformateur isolé (24, 40), 10 % à 75 % de l'enroulement total côté primaire dudit transformateur isolé (24, 40) est utilisé.

9. Alimentation à découpage selon l'une quelconque des revendications 1 à 7, **caractérisée en ce que** dans le couplage dudit point médian côté primaire (27, 42) dudit transformateur isolé (24, 40), 30 % à 60 % de l'enroulement total côté primaire dudit transformateur isolé (24, 40) est utilisé.

10. Alimentation à découpage selon l'une quelconque des revendications 1 à 7, **caractérisée en ce que** dans le couplage dudit point médian côté primaire (27, 42) dudit transformateur isolé (24, 40), 50 % de l'enroulement total côté primaire dudit transformateur isolé (24, 40) est utilisé.

11. Alimentation à découpage selon l'une quelconque des revendications 1 à 10, **caractérisée en ce que** ledit transformateur isolé (24) est un transformateur de balayage horizontal (24).

12. Alimentation à découpage selon l'une quelconque des revendications 1 à 10, **caractérisée en ce que** ledit transformateur isolé (40) est une bobine d'induction survolteuse (40) avec une prise centrale (42) en tant que point médian côté primaire (42).
